# EUROPÄISCHE PATENTSCHRIFT

(11) **EP 1 193 023 B1**
(45) Veröffentlichungstag und Bekanntmachung des Hinweises auf die Patenterteilung: **16.08.2006**
(21) Anmeldenummer: 01000445.5
(22) Anmeldetag: 12.09.2001
(51) Int. Cl.: B23K 26/00, B23K 10/02, B23K 26/14, B23K 26/32

(54) **Schweissverfahren**
Welding Method
Methode de soudage

(30) Priorität: 02.10.2000 AT 7212000
(43) Veröffentlichungstag der Anmeldung: 03.04.2002
(73) Patentinhaber: Inocon Technologie Gesellschaft m.b.H, 4800 Attnang-Puchheim (AT)
(72) Erfinder: Schwankhart , Gerhard, 4800 Attnang-Puchheim (AT)
(74) Vertreter: KLIMENT & HENHAPEL

(56) Entgegenhaltungen:
- DE-A- 4 216 643
- US-A- 1 091 479
- US-A- 2 653 277
- US-A- 2 764 668
- US-A- 3 975 615
- US-A- 4 689 467
- US-A- 5 990 446
- PATENT ABSTRACTS OF JAPAN vol. 011, no. 076 (M-569), 7. März 1987 (1987-03-07) -& JP 61 232079 A (NIPPON KOKAN KK), 16. Oktober 1986 (1986-10-16)
- PATENT ABSTRACTS OF JAPAN vol. 012, no. 236 (M-715), 6. Juli 1988 (1988-07-06) -& JP 63 030193 A (MITSUBISHI HEAVY IND LTD), 8. Februar 1988 (1988-02-08)
- PATENT ABSTRACTS OF JAPAN vol. 1999, no. 01, 29. Januar 1999 (1999-01-29) -& JP 10 272577 A (NIPPON STEEL CORP), 13. Oktober 1998 (1998-10-13)

## Beschreibung

Die vorliegende Erfindung bezieht sich auf ein Verfahren zum Verschweißen von metallischen Werkstücken, insbesondere von Leichtmetallwerkstücken mittels mindestens zweier Schweißquellen, die an jeweils einander gegenüberliegenden Seiten der Werkstücke angeordnet sind, gemäß dem Oberbegriff des Anspruchs 1 (siehe, z.B., US.A. 5 990 446).

Verfahren, bei welchen zwei Schweißquellen zum Einsatz kommen, sind bekannt. So ist es beispielsweise bekannt, zwei Werkstücke mittels gleichzeitig durchgeführter Laser- und Plasmaschweißung zu verbinden. Dabei werden ein Laserstrahl und ein Plasmastrahl von derselben Seite der Werkstücke auf den zu verschweißenden Bereich gerichtet. Dieses Hybridverfahren wurde entwickelt, um einen großen Nachteil, den das Verschweißen mittels eines Lasers mit sich bringt, zu beseitigen, nämlich das Erfordernis der geringen Werkstücktoleranzen. Das Verschweißen zweier Werkstücke mittels Laser erfordert, dass die beiden Werkstücke Stoß an Stoß aneinander liegen, wodurch die Fertigung dieser Werkstücke, beispielsweise Bleche, aufgrund der erforderlichen Toleranzen sehr teuer und aufwendig ist. Die zusätzliche Verschweißung mittels eines Plasmalichtbogens ermöglicht eine Schweißung auch bei größeren Spaltmaßen.

Das soeben beschriebene Verfahren bringt zwar akzeptable Ergebnisse bei Werkstücken, die keine nachträgliche Verformung erfahren. Für Werkstücke, an denen aber eine nachträgliche Verformung durchgeführt wird, ist dieses Verfahren jedoch nicht geeignet, da es lediglich auf die Problematik der größeren Spaltmaße abzielt, nicht jedoch auf die Problematik der schlechten Schweißnahtwurzel, welche bei Laserschweißungen ganz allgemein auftritt und eine, neben dem Problem der geringen Spaltmaße, ebenfalls große Problematik darstellt.

Bei Schweißungen von Werkstücken die einer nachträglichen Verformung unterzogen werden, beispielsweise bei "Taylored Blanks", also Blechen ohne Spiel, insbesondere aus Leichtmetallen wie Aluminiumlegierungen, ist eine solche durchgehend fehlerfreie Nahtwurzel aber unabdinglich, da die Naht beim Umformen sonst reißt.

Aus der DD 120.605 A ist bekannt, zwei Elektroden an jeweils einander gegenüberliegenden Seiten zweier zu verbindender Werkstücke anzuordnen. Der sich nach Anlegen einer Spannung ausbildende Lichtbogen bildet eine Wärmequelle, welche die zu verbindenden Werkstücke aufschmilzt. Nachteilig dabei ist jedoch die Tatsache, dass auf einen Schweißpunkt nur eine Wärmequelle einwirken kann, da zur Erzeugung eben dieser jeweils zwei einander gegenüber liegende Elektroden erforderlich sind. Das Werkstück ist in diesem Fall nicht stromführend. Daher kann mit einem nicht übertragenem Lichtbogen geschweißt werden. Dieser weist jedoch im Gegensatz zum erfindungsgemäßen Verfahren nur 1/1000 der Leistungsdichte eines übertragenen Lichtbogens auf. Dadurch weist das Verfahren gemäß der DD 120.605 A auch eine wesentlich geringere Schweißgeschwindigkeit und eine größere Neigung zu Verzug und Schrumpfung auf.

Aus der CH 441.543 ist das Verschweißen zweier Werkstücke mittels einander gegenüberliegend angeordneter Drahtelektroden offenbart. Insbesondere bei dünnwandigen zu verbindenden Werkstücken kann es hierbei jedoch zu gegenseitigen Beschädigungen der Elektroden kommen. Die Plasmaschweißquellen mit übertragenem Lichtbogen arbeiten außerdem im Gegensatz zur CH 441.543 mit nicht abschmelzenden Elektroden. Die Lichtbogentemperatur im Kern bei Schweißung mit übertragenem Lichtbogen ist wesentlich höher (18.000°C-25.000°C), die Leistungsdichte damit bis zu 1000 mal größer (10⁶ Watt / cm² beim erfindungsgemäßen Verfahren; 10³ Watt /cm² beim MAG Lichtbogen). Somit kann beim erfindungsgemäßen Verfahren mit einer gegenüber der CH 441.543 höheren Schweißgeschwindigkeit (und damit mit geringerem Verzug) gefahren werden. Außerdem sind Legierungen ohne Heißrisse schweißbar, somit auch Sintermetalle.

Genauso verhält es sich bei dem in der DE 195 27 070 offenbarten Schweißverfahren. Auch dort sind die beiden Laserschweißquellen einander gegenüber angeordnet, so dass eine gegenseitige Beschädigung nicht ausgeschlossen werden kann.

Die JP 61 232079 offenbart die Verwendung eines Laserschweißgeräts und eines Plasmaschweißgeräts, mit denen ein Werkstück von den gegenüberliegenden Seiten eines Werkstücks bearbeitet wird. Allerdings ist es Ziel der JP 61 232079, einen breiten Schweißwulst an beiden Seiten der zu bearbeitenden Werkstücke herzustellen, sodass sich dieses Verfahren nicht zur Bearbeitung von Werkstücken, die einer nachträglichen Verformung unterzogen werden und etwa aus Leichtmetallen wie Aluminiumlegierungen bestehen, eignet.

Beim Verfahren gemäß der US 4 689 467 wird lediglich mit einem Schweißgerät gearbeitet, bei dem es sich um ein Laserschweißgerät handelt. In der US 4 689 467 wird zwar eine Plasmaquelle erwähnt, die allerdings lediglich eine Hilfsenergiequelle darstellt, die nur zum Vorheizen des zu bearbeitenden Werkstücks dient, aber nicht zum Schweißen. Konkret wird zwischen einem bearbeitenden Lasergerät und einer Hilfsenergiequelle unterschieden, wobei ersteres dazu dient, das Werkstück zu bearbeiten, also zu schneiden oder zu schweißen, während zweitere dazu dient, hilfsweise Energie einzubringen. Des weiteren sieht die US 4 689 467 zwingend vor, dass die Bearbeitungspunkte von Laserschweißgerät und Heizeinrichtung nicht zusammenfallen.

Die US 2 764 668 offenbart ein Schweißverfahren mithilfe eines Lichtbogens, wobei insbesondere mit Wechselstrom unter Schutzgasatmosphäre gearbeitet wird. Insbesondere ist es bei dicken Metallteilen anzuwenden, und eignet sich daher nicht zur Bearbeitung von Werkstücken, die einer nachträglichen Verformung unterzogen werden, insbesondere aus Leichtmetallen wie Aluminiumlegierungen.

Die US 2 653 277 bezieht sich auf ein Schweißverfahren mit zweiphasiger Stromversorgung, wobei wiederum ein Lichtbogen, aber kein Plasmaverfahren angewendet wird.

Es ist daher die Aufgabe der vorliegenden Erfindung diesen Nachteil zu verhindern und ein Verfahren zum Schweißen von metallischen Werkstücken, insbesondere von Werkstücken aus Leichtmetall vorzuschlagen, das die Ausbildung einer dichten und gleichmäßigen Schweißnahtwurzel gewährleistet, wobei das Verfahren auch in vorhandene Verfahren implementiert werden können soll.

Erfindungsgemäß wird dies durch die kennzeichnenden Merkmale des Anspruchs 1 erreicht.

Dabei wird die Eigenheit des Plasmas, das Schmelzbad in Richtung gegen den Plasmabogen anzuheben, ausgenutzt und es kommt zur Ausbildung einer qualitativ hochwertigen Schweißwurzel, die auch bei einer nachträglichen Verformung der Werkstücke nicht reißt. Durch die gegenüberliegende Anordnung der Schweißquellen findet einerseits eine sehr gute Verschweißung der Werkstücke statt und andererseits kommt es zur Ausbildung einer dichten und durchgehenden Schweißnaht. Das stechende Arbeiten mindestens einer Schweißquelle verhindert die unabsichtliche, gegenseitige Beschädigung der gegenüberliegenden Schweißquellen, da die emittierten Strahlen im Falle eines Durchbruchs der Schweißnaht frei abstrahlen können.

Durch das kennzeichnende Merkmal des Anspruchs 2 kann eine besonders hohe Schweißnahtqualität erzielt werden.

Durch das kennzeichnende Merkmal des Anspruchs 3 wird verhindert, dass durch die mindestens zwei Schweißquellen

Im Anschluss erfolgt nun eine detaillierte Beschreibung des erfindungsgemäßen Verfahrens. Dabei zeigt
- Fig.1: die schematische Durchführung eines Verfahren mittels Laser- und Plasmaschweißvorrichtungen, das nicht unter dem Gegenstand des Anspruchs 1 fällt
- Fig.2: die schematische Durchführung des erfindungsgemäßen Verfahrens mittels zweier Plasmaschweißvorrichtunngen

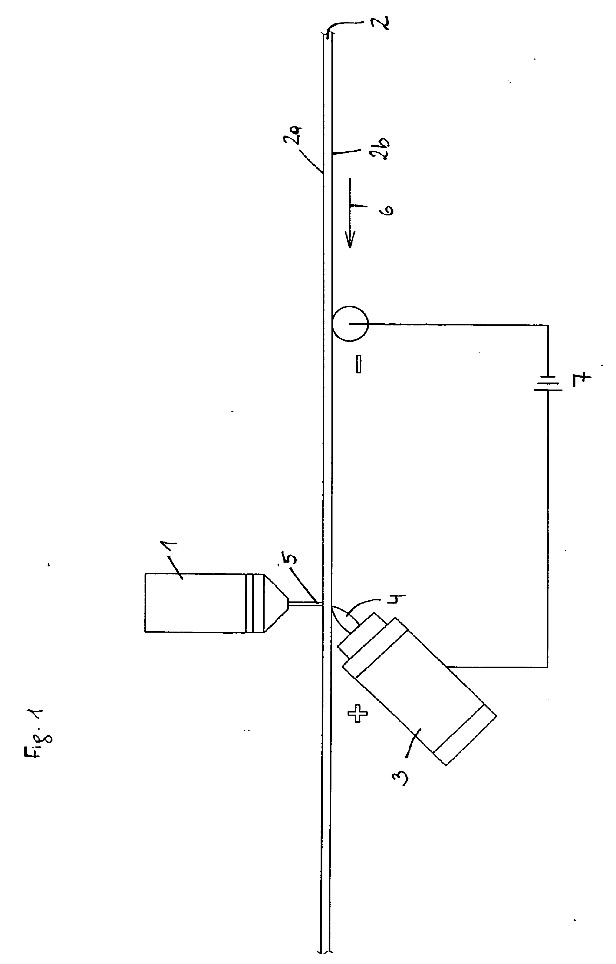

In Fig.1 ist eine Laserschweißvorrichtung 1 oberhalb eines zwei Seiten 2a,2b aufweisenden Werkstückes 2 angeordnet. Unterhalb des Werkstückes 2 ist eine Plasmaschweißvorrichtung 3 positioniert, deren Plasmalichtbogen 4 auf jenen Punkt fokussiert ist, auf welchen der Laserstrahl 5 der Laserschweißvorrichtung 1 am Werkstück 2 auftrifft.

Im vorliegenden Beispiel ist, das nicht unter dem Gegenstand des Anspruchs 1 fällt, wie schon in der AT GM 455/2000 beschrieben, die Elektrode der Plasmaschweißvorrichtung positiv gepolt und das Werkstück negativ, wobei als Stromquelle eine Gleichstromquelle 7 verwendet wird. Es ist jedoch auch möglich, Werkstück und Plasmaschweißvorrichtung umgekehrt zu polen. Die eingezeichnete Polung kombiniert mit der Verwendung einer Gleichstromquelle hat den Vorteil, dass zusätzlich eine Reinigung der Schweißnaht durchgeführt wird, ohne die für eine Wechselstromschweißung, welche ebenfalls zu einer Reinigung der Schweißnaht führen würde, charakteristische Verlangsamung der Schweißgeschwindigkeit in Kauf nehmen zu müssen.

Der Vorschub des Werkstücks 2 erfolgt in Richtung des Pfeiles 6. Die Plasmaschweißvorrichtung 3 Arbeit stechend, das heißt, der Plasmalichtbogen 4 brennt in eine Richtung, welche entgegen der Vorschubrichtung 6 des Werkstückes 2 gerichtet ist. Dadurch kann auch die Plasmaschweißvorrichtung 3 so positioniert werden, dass im Falle eines Durchbrechens der Schweißnaht die Plasmaschweißvorrichtung nicht durch den frei nach unten Abstrahlenden Laserstrahl beschädigt werden kann.

Die Durchführung einer stechenden Schweißung ist außerdem bei Vorschubgeschwindigkeiten von über 1 m/min erforderlich, da sonst der Plasmastrahl "hängen" bleibt. Im vorliegenden Fall wird jedoch mit Vorschubgeschwindigkeiten von ca. 7m/min gearbeitet, bei einer Stromstärke von ca. 110 Ampere. Die hohe Vorschubgeschwindigkeit und die relativ geringe Stromstärke ist insofern wichtig, da auf diese Art und Weise die Wärmeeinbringung durch die zusätzliche Plasmaschweißvorrichtung bzw. durch die beiden Plasmaschweißvorrichtungen niedrig gehalten werden kann.

Anstelle der in den Figuren dargestellten und bevorzugten positiven Polung der Plasmakathode und negativen Polung des Werkstückes kann die Polung jedoch auch umgekehrt erfolgen, mit dem Nachteil einer Schweißnaht von etwas schlechterer Qualität. Es ist auch denkbar von einer Polung des Werkstückes abzusehen und mittels eines bzw. zwei Plasmaschweißgeräten zu arbeiten, wie in GM 285/98 beschrieben, bei welchen eine im wesentlichen stabförmige Kathode in einem im wesentlichen ringförmigen Anodenraum angeordnet ist.

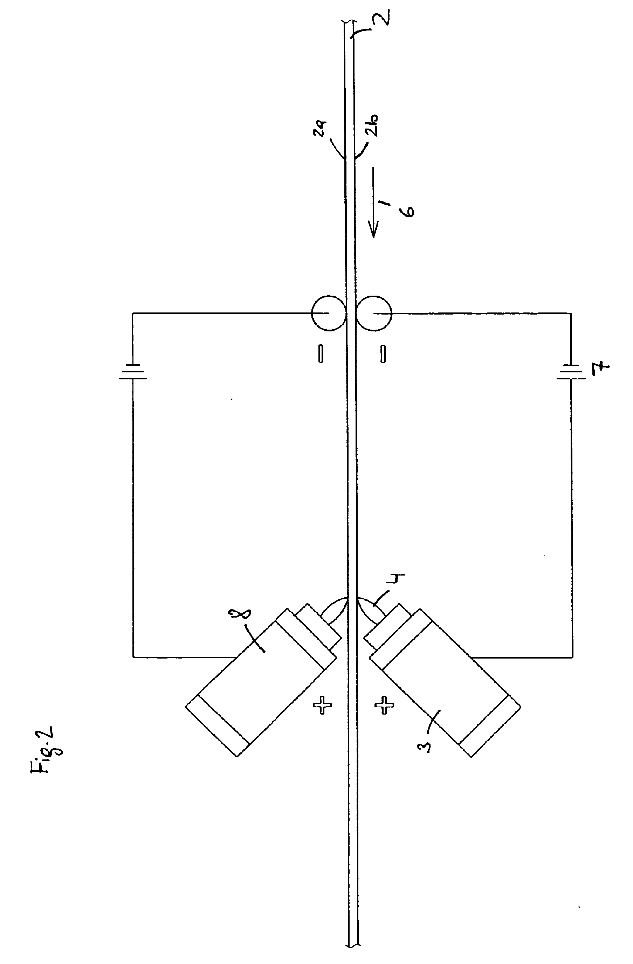

Fig.2 zeigt ein nach dem gleichen Prinzip arbeitendes Verfahren, das gemäß dem Anspruch 1 ist bei dem jedoch die eine Laserschweißquelle durch eine zweite Plasmaschweißquelle 8 ersetzt ist, welche mit der gleichen Polung versehen ist, wie die andere Plasmaschweißquelle 3. Eine solches Verfahren findet dann Anwendung, wenn nicht eine bestehende Laserschweißanlage verbessert werden soll, sondern wenn eine vollkommen neue Anlage gebaut werden kann.

## Patentansprüche

1. Verfahren zum Verschweißen von metallischen Werkstücken (2), insbesondere von Leichtmetallwerkstücken, mithilfe einer ersten Schweißvorrichtung (8), die auf eine Seite des Werkstücks (2) einwirkt, wobei dass
- die erste Schweißvorrichtung (8) ein Plasmaschweißgerät ist,
- die Schweißung an einer Schweißnaht gleichzeitig mittels einer zusätzlichen Schweißvorrichtung (3) erfolgt, bei der es sich ebenfalls um ein Plasmaschweißgerät (3) handelt,
- die Schweißung durch das zusätzliche Plasmaschweißgerät (3) von der gegenüberliegenden Seite des Werkstücks (2) erfolgt,
- das Werkstück (2) stromführend ist, und
**dadurch gekennzeichnet,** das zusätzliche Plasmaschweißgerät (3) stechend arbeitet.
- wobei die beiden Plasmaschweißgeräte (8,3) mit jeweils einer eigenen Stromquelle (7) angesteuert werden.

2. Verfahren nach Anspruch 1, **dadurch gekennzeichnet, dass** die aus den Schweißvorrichtungen (3,8) austretenden Strahlen auf den gleichen Schweißpunkt an den Werkstücken fokussiert sind.

3. Verfahren nach Anspruch 1 oder 2, **dadurch gekennzeichnet, dass** die Vorschubgeschwindigkeit der zu verschweißenden Werkstücke (2) zwischen 5 m/min und 9 m/min beträgt, vorzugsweise 7 m/min.

## Claims

1. A method for welding metallic workpieces (2), especially light metal workpieces, with the help of a first welding apparatus (8) acting upon one side of a workpiece (2), with
- the first welding apparatus (8) being a plasma-arc welding device;
- the welding on a weld seam occurring simultaneously by means of an additional welding apparatus (3) which is also a plasma-arc welding device;
- the welding by the additional plasma-arc welding device (3) occurring from the opposite side of the workpiece (2);
- the workpiece (2) is current-carrying, and
**characterized in that** the additional plasma-arc welding device (3) operates in a penetrative manner,
- with the two plasma-arc welding devices (8, 3) being triggered with a separate power source (7) each.

2. A method according to claim 1, **characterized in that** the rays emerging from the welding apparatuses (3, 8) are focused on the same welding spots on the workpieces.

3. A method according to claim 1 or 2, **characterized in that** the rate of feed of the workpieces (2) to be welded is between 5 m/min and 9 m/min, preferably 7 m/min.

## Revendications

1. Procédé pour le soudage de pièces (2) métalliques, en particulier de pièces de métaux légers, à l'aide d'un premier dispositif de soudage (8) agissant sur un côté de la pièce (2), dans lequel
- le premier dispositif de soudage (8) est un appareil de soudage au plasma,
- le soudage au niveau d'une soudure est réalisé en même temps au moyen d'un dispositif de soudage supplémentaire (3) qui est également un appareil de soudage au plasma (3),
- le soudage est réalisé par l'appareil de soudage au plasma supplémentaire (3) sur le côté opposé de la pièce (2),
- la pièce (2) est conductrice électrique,
**caractérisé en ce que** l'appareil de soudage au plasma supplémentaire (3) travaille par points en ligne continue,
- les deux appareils de soudage au plasma (8, 3) étant commandés chacun par leur alimentation électrique (7) propre.

2. Procédé selon la revendication 1, **caractérisé en ce que** les faisceaux sortant des dispositifs de soudage (3, 8) sont concentrés sur le même point à souder sur les pièces.

3. Procédé selon la revendication 1 ou 2, **caractérisé en ce que** la vitesse d'avancement des pièces (2) à souder est de 5 m/min à 9 m/min, de préférence de 7 m/min.
